# FASCICULE DE BREVET EUROPEEN

(11) **EP 0 369 846 B1**
(45) Date de publication et mention de la délivrance du brevet: **15.09.1993**
(21) Numéro de dépôt: 89402928.9
(22) Date de dépôt: 24.10.1989
(51) Int. Cl.: B67D 3/00, B65D 77/06

(54) **Procédé et installation de conservation et/ou distribution d'un produit liquide ou pâteux**
Verfahren und Vorrichtung zum Frischhalten und/oder zur Abgabe eines flüssigen oder dickflüssigen Stoffes
Method and installation for preserving and/or dispensing a liquid or viscous product

(30) Priorité: 28.10.1988 FR 8814149
(43) Date de publication de la demande: 23.05.1990
(60) Demande divisionnaire: 91200476.9
(73) Titulaire: BONGRAIN S.A., 78280 Guyancourt (FR)
(72) Inventeur: Herpe, Michel, F-91400 Orsay (FR)
(74) Mandataire: Orès, Bernard

(56) Documents cités:
- EP-A- 0 053 813
- EP-A- 0 152 283
- EP-A- 0 237 260
- DE-A- 3 709 155
- FR-A- 1 303 926
- FR-A- 1 333 222
- FR-A- 2 547 669
- US-A- 3 226 002

## Description

L'invention a pour objet un procédé et une installation de conservation et de distribution d'un produit liquide ou pâteux, ainsi qu'une réserve de produit pour la mise en oeuvre du procédé et/ou propre à être utilisée dans une telle installation.

On connaît déjà, dans de nombreuses réalisations, des installations pour la distribution, a la demande, de doses individuelles d'un liquide (voir par exemple EP-A-0 252 420) ou d'un produit d'assaisonnement de la nourriture à consistance pâteuse (voir par exemple GB-A-2 154 204) ou encore d'un produit laitier frais comme du yaourt (voir par exemple FR-A-2 562 053). Dans l'installation que décrit ce dernier document, une capacité réfrigérée est chargée en yaourt liquide et des moyens sont prévus pour faire circuler à la demande une dose de yaourt depuis la réserve jusqu'à une mélangeuse où est introduit un produit aromatisant avant transfert d'une dose dans un gobelet de réception de mélange. La capacité réfrigérée, de même que les divers circuits sont périodiquement nettoyés par pulvérisation d'un liquide de lavage, puis d'un ou de produit(s) de rinçage. Pour s'affranchir des inconvénients que présentent ces opérations indispensables de nettoyage, les installations selon les deux documents mentionnés en premier lieu utilisent, pour des boissons carbonatées et pour des sauces d'assaisonnement, respectivement, un réservoir souple qui enferme le produit à distribuer lequel est extrait par gravité dans le cas des liquides et par une action mécanique dans le cas des sauces. De tels dispositifs de sac ou poche souple déformable connus dans la technique sous le nom anglais de "bag-in-a-box" ont été également proposés pour la distribution de doses unitaires de liquide ou de produit pâteux en tant que réservoirs jetables dont le contenu peut être soutiré à partir d'un tube de distribution souple après que le sac ait été introduit dans une machine comportant des moyens de réfrigération du contenu du sac, comme décrit par exemple dans EP-A-0 152 283 qui, cependant, n'envisage pas dans le cas d'un réservoir jetable souple d'associer à ce dernier un circuit à boucle fermée qui lui est en partie extérieur. Dans un autre dispositif connu, le contenu du sac ou poche déformable est soutiré à l'aide d'une pompe péristaltique, voir par exemple EP-A-0 053 813 dans lequel on ne prévoit pas non plus de circuit en boucle fermée en partie extérieur au sac ou poche déformable. Dans encore un autre dispositif connu, c'est une pompe péristaltique également qui est utilisée pour délivrer une boisson préparée à partir d'eau et d'un concentré aromatisé (DE-37 09 155).

Si la distribution de liquides ou de certains produits pâteux à l'aide d'un dispositif tel que décrit dans EP-A-0 053 813 ne présente pas de difficultés, le dispositif n'est pas prévu pour assurer la conservation du produit, de sorte qu'il ne convient pas pour la distribution de produits laitiers frais, comme des yaourts ou pour la distribution de certains autres produits qu'ils soient alimentaires ou non et qui subissent une synérèse ou perdent leurs caractéristiques d'homogénéité, par exemple dans le cas d'émulsions en se séparant en plusieurs phases lors du stockage prolongé dans l'appareil ou l'installation de distribution.

C'est, par conséquent, un but général de l'invention de fournir un procédé et une installation particulièrement bien adaptés à la conservation et à la distribution de produits liquides ou à consistance pâteuse dont les propriétés de texture, d'homogénéité, de consistance, de viscosité, de rhéologie, de stabilité, mais aussi organoleptiques, -dans le cas de produits alimentaires-, sont susceptibles de se modifier de façon importante au cours du stockage qui précède leur distribution.

C'est, de ce fait, un but de l'invention de fournir un procédé et un dispositif de conservation et de distribution d'un produit liquide ou à consistance pâteuse sous forme de doses unitaires d'utilisation particulièrement simple, notamment en ce qu'ils permettent de s'affranchir des étapes de nettoyage des reserves de produits à distribuer, comme nécessaire dans certaines installations connues.

C'est, encore, un but de l'invention de fournir un procédé et un dispositif propres à trouver application aussi bien pour la distribution de produits délivrés à température ambiante qu'à une température plus élevée ou plus basse.

C'est, à cet égard, un but de l'invention de fournir un procédé et un dispositif qui permettent en outre de délivrer un produit de texture, consistance, et caractéristiques organoleptiques différentes de celles du produit ou des produits contenus dans la réserve mise en oeuvre.

C'est, enfin, un but de l'invention de fournir un procédé et un dispositif bien adaptés à la conservation et à la distribution de produits du domaine alimentaire ou du domaine médical pour lesquels on exige que soient respectées non seulement des conditions d'hygiène, mais aussi des conditions plus sévères d'aseptie ou de protection à l'égard des germes microbiens ou analogues.

Un procédé selon l'invention, pour la conservation et la distribution d'un produit liquide ou à consistance pâteuse enfermé dans une réserve hors de laquelle il peut être extrait par actionnement d'un moyen de soutirage approprié et qui est mis en mouvement par une pompe, -aussi longtemps que la réserve n'est pas entièrement vide-, dans un circuit en boucle fermée en partie extérieur à ladite réserve et auquel peut être relié le moyen de soutirage du produit lors de la mise en place de ladite réserve dans un appareil de conservation et de distribution est caractérisé en ce que ladite réserve est un sac souple déformable dans lequel la conservation du produit est effectuée indépendamment de la distribution, -c'est-à-dire indépendamment du fait que le moyen de soutirage est ou non relié au circuit en boucle fermée-, le soutirage étant effectué à l'aide d'un conduit distinct dudit circuit en boucle et fermé aussi longtemps que ledit sac n'est pas mis en place dans ledit appareil de conservation et de distribution.

Il en résulte que le sac souple peut être rempli de produit à distribuer dans les meilleures conditions d'hygiène et d'aseptie d'une part, et que ces conditions sont conservées, d'autre part, tout au long de l'extraction du produit hors du sac.

Une installation pour la conservation et la distribution d'un produit liquide ou à consistance pâteuse à partir d'une réserve dudit produit hors de laquelle ledit produit peut être extrait à l'aide d'un moyen de soutirage approprié, avec des moyens de dérivation associés à la réserve de produit constitués par un tube ou tuyau souple relié à deux embouts de la réserve et des moyens de pompe pour faire circuler suivant une boucle fermée en partie extérieure à ladite réserve le produit contenu dans la réserve est caractérisé en ce que ladite réserve est un sac souple déformable et en ce qu'elle comprend un moyen de soutirage de doses unitaires comme un robinet ou analogue à actionnement manuel ou automatique propre à coopérer avec un conduit relié au tube ou tuyau souple formant les moyens de dérivation associés à la réserve de produit, l'extrémité libre du conduit distante de celle de liaison dudit conduit audit tube ou tuyau souple étant fermée aussi longtemps que le sac n'est pas mis en place dans l'installation.

Dans une réalisation préférée de l'invention le conduit avec lequel coopère un moyen de soutirage de doses unitaires est solidaire d'un troisième embout du sac souple, distinct des embouts auxquels est relié le tuyau souple.

Selon une autre caractéristique de l'invention, on prévoit d'associer au moyen de soutirage un dispositif de barrière aseptique.

L'invention prévoit également que le tuyau relié aux deux premiers embouts et le conduit relié au troisième embout sont solidaires du sac souple et forment avec ce dernier un ensemble d'une pièce, indémontable, étanche au liquide et au gaz.

L'invention prévoit également dans une telle installation des moyens de réglage de la température du produit conservé et distribué ménagés par des moyens de chauffage ou de refroidissement associés audit tube souple.

Une telle organisation de l'installation permet de régler la température du produit conservé et distribué de façon particulièrement avantageuse.

L'invention a également pour objet une réserve pour la mise en oeuvre du procédé tel que défini ci-dessus ou propre à être utilisée dans une installation telle que définie ci-dessus, caractérisée en ce qu'elle est constituée par un sac souple déformable, et en ce qu'elle comprend au moins deux embouts distants l'un de l'autre associés à la réserve et réunis entre eux, a l'extérieur de ladite réserve, par un tube ou tuyau souple permettant la circulation suivant une boucle fermée du produit à conserver et à distribuer, ainsi qu'un conduit pour le soutirage du contenu de la réserve, ledit conduit étant relié à une de ses extrémités audit tube ou tuyau (souple), tandis que son autre extrémité est fermée aussi longtemps que ledit soutirage n'a pas commencé.

Dans une réalisation préférée d'une telle reserve souple celle-ci est compartimentée, le plus simplement à l'aide de lignes de soudure réunissant deux faces opposées du sac pour définir à l'intérieur du sac lui-même un trajet sinueux de circulation du produit à conserver et à distribuer.

Dans une réalisation d'une telle réserve, celle-ci comporte un troisième embout distant des deux premiers embouts auquel est solidarisé le conduit, le sac, les embouts, le tube ou tuyau souple et le conduit formant un ensemble indémontable, d'une pièce, étanche au liquide et au gaz.

D'autres caractéristiques et avantages de l'invention apparaîtront de la description qui suit, faite à titre d'exemple et en référence au dessin annexé dans lequel :
- la figure 1 est une vue schématique, en coupe, d'une partie d'installation selon l'invention ;
- la figure 2 est une vue schématique d'une installation selon l'invention suivant la flèche A de la figure 1 ;
- la figure 3 est une vue schématique en perspective d'un bac de réception d'un sac propre à équiper une installation selon l'invention ;
- la figure 4 est un schéma illustrant le procédé selon l'invention ;
- la figure 5 est une vue schématique d'une réalisation préférée d'un sac souple formant réserve de produit à distribuer ;
- la figure 6 est une vue en coupe selon la ligne 6-6 de la figure 5 ;
- la figure 7 est une vue en perspective d'une forme de réalisation préférée d'une installation selon l'invention ;
- la figure 8 est une vue partielle, à grande échelle, d'une partie d'un sac propre à équiper une installation selon l'invention et de moyens de ladite installation ;
- la figure 9 est une vue schématique d'une partie d'une autre forme de réalisation d'installation selon l'invention.

Pour la conservation et/ou la distribution d'un produit liquide ou à consistance pâteuse P, l'invention propose de faire application d'un sac souple s, du type de ceux utilisés dans la technique de l'emballage pour les systèmes dits "bag-in-a-box" et qui sont des poches ou enveloppes souples, jetables, à base d'un ou de film(s) de polyéthylène ou de matières plastiques analogues choisies en fonction de leurs propriétés de protection mais aussi de conservation et d'inocuité à l'égard de leur contenu. Conformément à l'invention, le sac souple s qui est destiné à équiper une installation de conservation et/ou de distribution décrite plus en détail ci-après comprend deux embouts 10, 11 réunis entre eux, à l'extérieur du sac, par une canalisation comme un tube ou tuyau souple 13.

De façon plus précise, l'embout 11 comprend une platine 20 de fixation sur le sac s, percée d'un orifice central 21, et un manchon 22 de même diamètre que l'orifice 21 qui se termine à l'opposé dudit orifice par un téton 23. Sur le manchon 22 est ménagée, d'une part, une collerette 24 sensiblement parallèle à la platine 20 et à courte distance de celle-ci et, d'autre part, dirigé sensiblement perpendiculairement à l'axe X du manchon un second téton 25.

L'embout 10 est identique à l'embout 11 et ses parties constitutives portent les mêmes références frappées de l'indice '.

Conformément à l'invention, le téton 23′ de l'embout 10 est relié par le tube ou tuyau souple 13 au téton 25 de l'embout 11 définissant ainsi à l'extérieur du sac s un trajet de circulation du produit P en boucle fermée entre les embouts 10 et 11, respectivement.

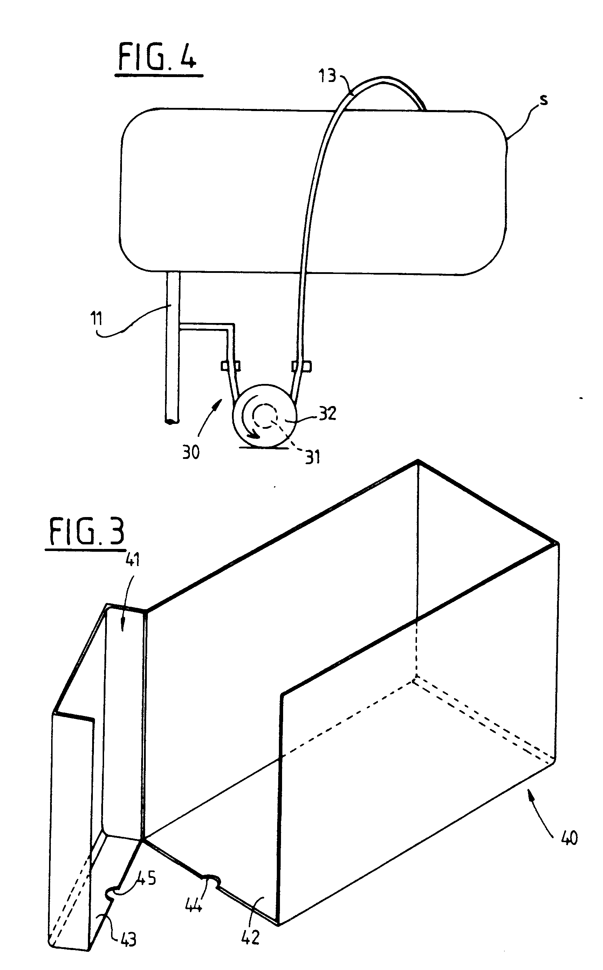

Pour la mise en mouvement du produit P dans ce circuit en boucle fermée, l'invention prévoit d'associer au tube ou tuyau souple 13 une pompe 30, avantageusement du type péristaltique, propre à être entraînée de façon intermittente ou continue par un moteur 31. Pour ce faire, et comme montré sur la figure 4, le tube ou tuyau souple 13 est le plus simplement mis en place autour du rotor 32 de la pompe péristaltique et la mise en route du moteur 31 provoque alors la circulation du produit P entre les embouts 10 et 11, des moyens de clapet antiretour, non représentés, étant éventuellement interposés à la sortie de la pompe 30.

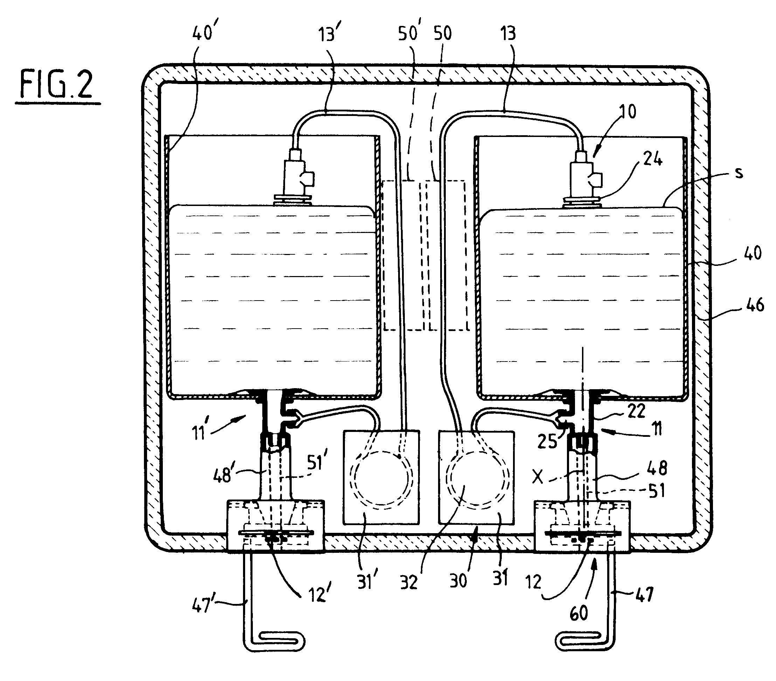

Pour faciliter l'utilisation d'une installation selon l'invention, on prévoit en outre de lui associer un bac ou boîte 40, figures 2 et 3, lequel est muni d'une porte pivotante 41 avec, dans le fond 42 du bac et le fond 43 de la porte, des découpes 44 et 45, respectivement, permettant le positionnement de l'embout 11 à l'aide d'un chevauchement du manchon 22 entre la platine 20 et la collerette 24.

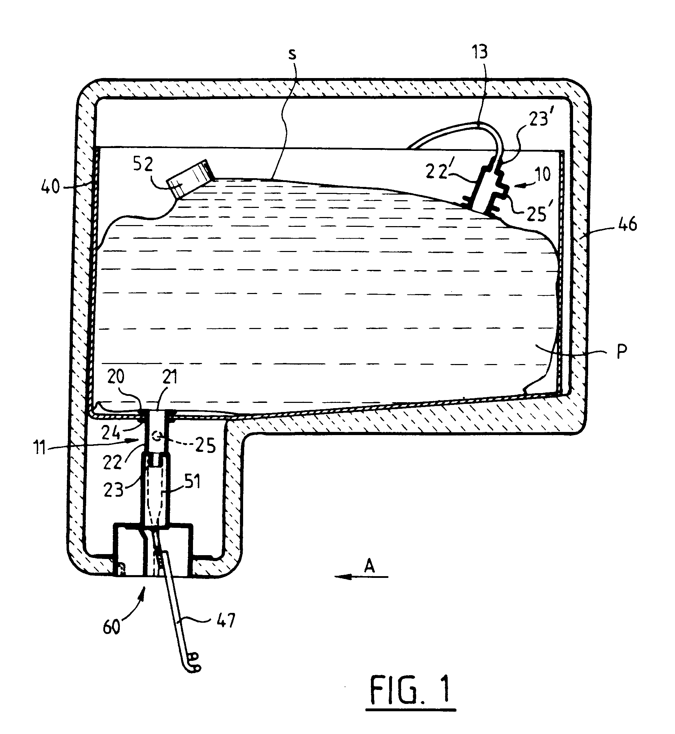

Dans la forme de réalisation de l'invention illustrée sur la figure 2 et qui vise une installation de distribution du produit P suivant des doses unitaires, l'installation comporte deux bacs ou boîtes 40 et 40′ enfermés dans une enceinte isotherme 46 laquelle comprend également des moyens de soutirage 12,12′, -comme des robinets à bras d'actionnement 47 et 47′ à organes de distribution en soi connus 48 et 48′-, coopérant avec des conduits 51 et 51′ reliés aux embouts 11 et 11′, respectivement. Comme également montré sur les figures 1 et 2 l'installation de distribution est avantageusement munie d'un dispositif de barrière aseptique, 60.

Lorsqu'une installation selon l'invention est destinée à la conservation et la distribution d'un ou de produits à une température plus élevée ou plus basse que la température ambiante, des moyens de chauffage ou de refroidissement montrés schématiquement sur la figure 2 en 50 et 50′ peuvent être associés aux tubes ou tuyaux 13 et 13′ de chacune des réserves de produits à distribuer.

Les étapes du procédé et le fonctionnement d'une installation selon l'invention découlent immédiatement de ce qui précède.

Le produit à conserver et à distribuer, par exemple du yaourt ou tout autre produit liquide ou à consistance pâteuse du domaine alimentaire ou médical (sans que ces indications aient quelque caractère limitatif que ce soit) est d'abord introduit par un nez 52 et avec les précautions d'usage habituelles en ce qui concerne l'hygiène et l'asseptie, notamment, dans un sac s et ce dernier, préalablement muni des embouts 10 et 11, du tube ou tuyau souple 13 qui les relient, et du conduit 51 dont l'extrémité distante du sac est fermée, est alors scellé.

Le cas échéant, un ou des gaz neutre(s) est (sont) introduit(s) dans le sac à la fin de l'opération de remplissage.

Le sac s est alors mis en place dans le bac ou boîte 40 mais avec le conduit 51 dont l'extrémité distante de l'embout 11 est fermée à l'extérieur dudit bac ou boîte.

Après que cette opération de positionnement du sac s dans la boîte 40 ait eu lieu, le plus simplement en ouvrant la porte 41 et en plaçant le manchon 22 dans les découpes 44 et 45, on dispose le tube ou tuyau souple 13 dans la pompe péristaltique 30, on abouche le conduit 51 préalablement ouvert aux organes comme 48 associés au robinet de soutirage 12 et on met en place le dispositif de barrière aseptique 60. La pompe 30 est alors mise en route et le produit P à conserver et à distribuer mis en mouvement de façon intermittente ou continue à l'extérieur du sac s et dans celui-ci, avec pour conséquence que ledit produit garde, au cours de sa durée de vie, ses propriétés de texture, d'homogénéité, de consistance, de viscosité, etc... indispensables à la conservation de ses caractéristiques organoleptiques dans le cas d'un produit alimentaire.

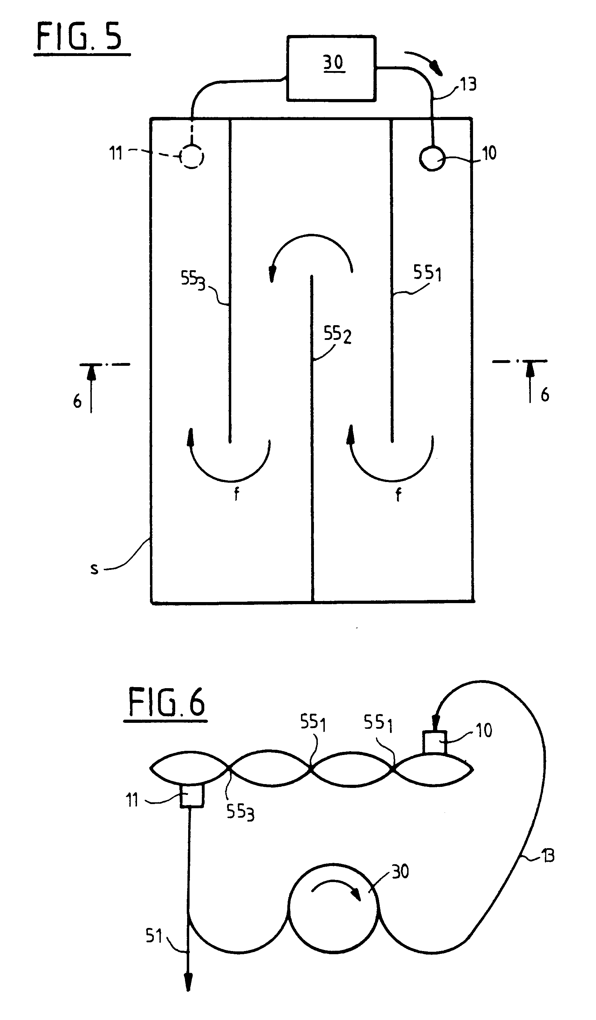

Pour encore améliorer la conservation des propriétés du produit P, l'invention prévoit avantageusement de conformer le sac s comme montré sur les figures 5 et 6, c'est-à-dire en formant à l'intérieur du sac même un circuit sinueux de circulation du produit P, le plus simplement en reliant par des lignes de soudure comme 55₁, 55₂, 55₃ les faces en regard du sac, lesdites lignes régnant sur une partie seulement de la hauteur du sac comme bien montré sur la figure 5 où le trajet sinueux est indiqué par les flèches f.

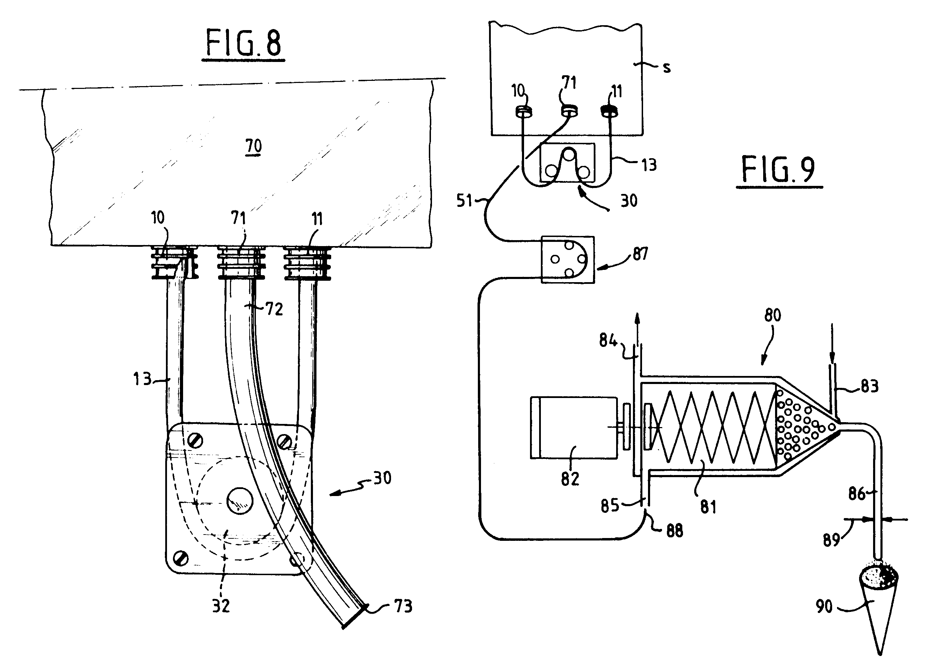

Dans une forme de réalisation préférèe, le sac souple, le tube ou tuyau souple de circulation de produit à l'extérieur du sac, le conduit de distribution et les embouts sont réalisés sous forme d'un ensemble unitaire indémontable. Dans une telle réalisation, figure 8, le sac 70 constitué d'une enveloppe souple dont les faces en regard sont reliées, localement, par des lignes de soudure pour établir un circuit sinueux de circulation de produit P présente des embouts 10 et 11 thermosoudés en des zones peu distantes l'une de l'autre. Sur les embouts 10 et 11 sont également fixées, avantageusement par thermo-soudage, les extrémités respectives du tube souple 13, avec lequel est propre à coopérer le rotor 32 de la pompe péristaltique 30. Sensiblement au milieu de la ligne reliant les embouts 10 et 11, un troisième embout 71 est également fixé par thermo-soudage sur le sac 70 et sur cet embout est fixée de manière étanche l'extrémité 72 du conduit 51 dont l'autre extrémité 73 est scellée, aussi longtemps que le sac rempli de produit à distribuer n'est pas mis en place dans l'appareil de distribution.

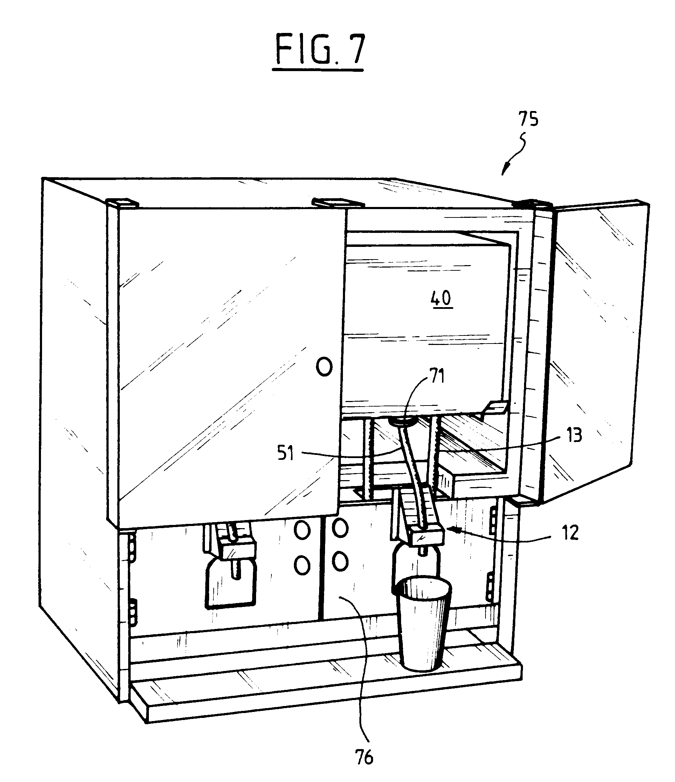

Lorsque ce dernier est prévu pour la mise en oeuvre de sacs du type de ceux qui viennent d'être décrits, son aspect général est comme montré sur la figure 7, c'est-à-dire d'une armoire 75 propre à recevoir deux boîtes ou bacs 40 enfermant chacun une réserve souple 70 d'où part un conduit 51 avec lequel coopère les moyens de soutirage 12, tandis que le tuyau souple 13 coopère avec la pompe péristaltique dissimulée derrière un volet 76.

Dans la forme de réalisation montrée sur la figure 9, l'installation du type de celles décrites ci-dessus comprend en outre des moyens 80 pour modifier la texture et/ou la consistance, et/ou les propriétés organoleptiques du produit distribué à partir de celui stocké dans la réserve s. Dans la forme de réalisation décrite et représentée, ces moyens comprennent un réacteur de foisonnement 81 entraîné par un moteur 82. Au réacteur 81 est associé un circuit réfrigérant, le plus simplement d'eau glycolée à -5°C circulant à contre-courant du produit à distribuer et qui comporte ainsi une arrivée 83 et une sortie 84 alors que l'arrivée du produit P, montrée en 85, est à l'aplomb de la sortie d'eau 84 et la sortie 86 du produit foisonné au voisinage de l'entrée 83 d'eau froide glycolée.

Dans cette forme de réalisation, après que le tube ou tuyau souple extérieur à la réserve s ait été amené à coopérer avec la pompe péristaltique 30, le conduit 51 de soutirage, -de plus grande longueur que celui des réalisations précédentes-, est amené lui aussi à coopérer avec une pompe péristaltique 87 avant d'être abouché par son extrémité 88 à l'entrée 85 du réacteur de foisonnement 81.

Une installation selon l'invention comprenant les moyens qui viennent d'être décrits permet alors, lorsque le contenu du sac s est, par exemple, du yaourt liquide ou pâteux de distribuer à l'aide des moyens de soutirage montrés schématiquement par la double flèche 89 des portions individuelles 90 de glaces ou yaourts, ou frozen yogurt et cela de façon simple, sûre et hygiénique.

## Revendications

1. Procédé pour la conservation et la distribution d'un produit liquide ou à consistance pâteuse (P) enfermé dans une réserve hors de laquelle il peut être extrait par actionnement d'un moyen de soutirage approprié (12) et qui est mis en mouvement par une pompe, -aussi longtemps que la réserve n'est pas entièrement vide-, dans un circuit en boucle fermée en partie extérieur à ladite réserve et auquel peut être relié le moyen de soutirage du produit (P) lors de la mise en place de ladite réserve dans un appareil de conservation et de distribution, caractérisé en ce que ladite réserve est un sac souple déformable (s) dans lequel la conservation du produit (P) est effectuée indépendamment de la distribution, -c'est-à-dire indépendamment du fait que le moyen de soutirage (12) est ou non relié au circuit en boucle fermée-, le soutirage étant effectué à l'aide d'un conduit (51) distinct dudit circuit en boucle et fermé aussi longtemps que ledit sac (s) n'est pas mis en place dans ledit appareil de conservation et de distribution.

2. Installation pour la conservation et la distribution d'un produit liquide ou à consistance pâteuse (P) à partir d'une réserve dudit produit hors de laquelle ledit produit peut être extrait à l'aide d'un moyen de soutirage approprié (12), avec des moyens de dérivation associés à la réserve de produit constitués par un tube ou tuyau souple (13) relié à deux embouts (10, 11) de la réserve et des moyens de pompe (30) pour faire circuler suivant une boucle fermée en partie extérieure à ladite réserve le produit (P) contenu dans la réserve, caractérisée en ce que ladite réserve est un sac souple déformable (s) et en ce qu'elle comprend un moyen de soutirage de doses unitaires comme un robinet ou analogue (12, 12') à actionnement manuel ou automatique propre à coopérer avec un conduit (51) relié au tube ou tuyau souple (13) formant les moyens de dérivation associés à la réserve de produit (P), l'extrémité libre du conduit (51) distante de celle de liaison dudit conduit audit tube ou tuyau souple (13) étant fermée aussi longtemps que le sac (s) n'est pas mis en place dans l'installation.

3. Installation selon la revendication 2, caractérisée en ce que ledit conduit (51) avec lequel coopère un moyen de soutirage de doses unitaires est solidaire d'un troisième embout (71) du sac souple, distinct des embouts (10, 11) auxquels est relié le tuyau souple (13).

4. Installation selon la revendication 3, caractérisée en ce que les trois embouts (10, 11, 71), le tuyau (13) relié aux deux premiers embouts (10, 11) et le conduit (51) relié au troisième embout (71) sont solidaires du sac souple (s) et forment avec ce dernier un ensemble d'une pièce, indémontable, étanche au liquide et au gaz.

5. Installation selon l'une des revendications 2 à 4, caractérisée en ce qu'elle comprend en outre des moyens (50) de réglage de la température du produit conservé et distribué ménagés par des moyens de chauffage ou de refroidissement associés audit tube souple (13).

6. Installation selon l'une quelconque des revendications 2 à 5, caractérisée en ce qu'elle comprend en outre un dispositif de barrière aseptique (60) associé audit moyen de soutirage (12, 12').

7. Réserve de produit à conserver et à distribuer pour la mise en oeuvre du procédé selon la revendication 1 et/ou propre à être utilisée dans une installation selon l'une quelconque des revendications 2 à 6, caractérisée en ce qu'elle est constituée par un sac souple déformable (s), et comporte au moins deux embouts (10, 11) distants l'un de l'autre associés à la réserve et réunis entre eux, à l'extérieur de ladite réserve, par un tube ou tuyau souple (13) permettant la circulation suivant une boucle fermée du produit (P) à conserver et à distribuer, et en ce qu'elle comporte également un conduit (51) pour le soutirage du contenu de la réserve, ledit conduit étant relié à une de ses extrémités audit tube ou tuyau souple (13) tandis que son autre extrémité est fermée aussi longtemps que ledit soutirage n'a pas commencé.

8. Réserve selon la revendication 7, caractérisée en ce qu'elle comporte un troisième embout (71) distant des deux premiers embouts (10, 11) auquel est solidarisé le conduit (51) et en ce que le sac (70), les embouts (10, 11, 71), le tube ou tuyau souple (13) et le conduit (51) forment un ensemble indémontable, d'une pièce, étanche au liquide et au gaz.

9. Réserve selon la revendication 7 ou 8, caractérisée en ce qu'elle est compartimentée à l'aide de lignes de soudure (55) réunissant deux faces opposées du sac (s) pour définir à l'intérieur du sac lui-même un trajet sinueux de circulation du produit (P).

## Claims

1. A method of conserving and distributing a liquid product or a product of a pasty consistency (P) enclosed in a reserve from which it may be extracted by the actuation of a suitable withdrawal means (12) and which is set in motion by a pump - as long as the reserve is not completely empty - in a closed loop circuit partly outside the said reserve, and to which the means of extracting the product (P) may be connected when the said reserve is placed in position in a conserving and distributing apparatus, characterised in that the said reserve is a deformable flexible bag (s) in which the product (P) is kept independently of distribution - that is to say independently of the fact that the extraction means (12) is or is not connected to the closed loop circuit - extraction being carried out by means of a pipe (51) which is distinct from the said loop circuit and is closed as long as the said bag (s) is not placed in position in the said conserving and/or distributing apparatus.

2. An installation for conserving and distributing a liquid product or a product of a pasty consistency (P) from a reserve of the said product, from which the said product may be extracted by means of a suitable withdrawal means (12), with branching means associated with the reserve of product, constituted by a flexible tube or pipe (13) connected to two nipples (10, 11) of the reserve and pump means (30) for causing the product (P) contained in the reserve to be circulated in a closed loop partly outside the said reserve of product (P) contained in the reserve, characterised in that the said reserve is a deformable flexible bag (s) and in that it comprises a means of withdrawing unitary doses, such as a tap or the like (12, 12') intended for manual or automatic actuation and adapted to cooperate with a pipe (51) connected to the flexible tube or pipe (13) forming the branching means associated with the reserve of product (P), the free end of the pipe (51) which is remote from that for connecting the said pipe to the said flexible tube (13) being closed until such time as the bag (s) is not placed in position in the installation.

3. An installation according to Claim 2, characterised in that the said pipe (51) with which cooperates a means of drawing off unitary doses is connected to a third nipple (71) on the flexible bag, distinct from the nipples (10, 11) to which the said flexible pipe (13) is connected.

4. An installation according to Claim 3, characterised in that the three nipples (10, 11, 71), the pipe (13) connected to the first two nipples (10, 11) and the pipe (51) connected to the third nipple (71) are fixed to the flexible bag (s) with which they form a whole comprising one non-removable item which is fluid-tight and gas-tight.

5. An installation according to one of Claims 2 to 4, characterised in that it furthermore comprises means (50) for regulating the temperature of the product conserved and distributed and constituted by heating or cooling means associated with the said flexible tube (13).

6. An installation according to any one of Claims 2 to 5, characterised in that it comprises furthermore an aseptic barrier device (60) associated with the said withdrawal means (12, 12').

7. A reserve of product to be conserved and distributed, for carrying out the method according to Claim 1 and/or adapted to be used in an installation according to any one of Claims 2 to 6, characterised in that it is constituted by a deformable flexible bag (s) and comprises at least two nipples (10, 11) spaced apart from each other, associated with the reserve and connected inter se, outside the said reserve, by a tube or flexible pipe (13) allowing closed-loop circulation of the product (P) to be conserved and distributed, and in that it comprises likewise a pipe (51) for drawing off the contents of the reserve, one of the ends of the said pipe being connected to the said flexible tube or pipe (13) while its other end is closed as long as the said drawing off has not commenced.

8. A reserve according to Claim 7, characterised in that it comprises a third nipple (71) spaced apart from the first two nipples (10, 11) to which the pipe (51) is fixed and in that the bag (70), the nipples (10, 11, 71), the flexible tube or pipe (13) and the pipe (51) form one non-removable assembly which is fluid-tight and gas-tight.

9. A reserve according to Claim 7 or 8, characterised in that it is compartmented by means of weld lines (55) connecting two opposite surfaces of the bag (s) in order to define within the interior of the bag itself a sinuous path for circulation of the product (P).

## Patentansprüche

1. Verfahren zum Frischhalten und zur Abgabe eines flüssigen oder dickflüssigen Stoffes (P), der in einem Behälter eingeschlossen ist, aus welchem er durch die Wirkung eines geeigneten Entnahmemittels (12) entnommen werden kann, und der -solange der Behälter nicht gänzlich geleert ist- durch eine Pumpe in einem geschlossenen Kreislauf zum Teil außerhalb dieses Behälters bewegt wird, an welchem das Entnahmemittel für den Stoff (P) bei Anbringen dieses Behälters an ein Frischhalte- und Abgabegerät angeschlossen werden kann, **dadurch gekennzeichnet, daß** der Behälter ein deforimierbarer, weicher Beutel (s) ist, in welchem das Frischhalten des Stoffes (P) unabhängig von der Abgabe durchgeführt wird, -das heißt, unabhängig davon, ob das Mittel zur Entnahme (12) an den geschlossenen Kreislauf angeschlossen ist oder nicht-, wobei die Entnahme mittels einer Leitung (51) erfolgt, die sich von dem geschlossenen Kreislauf unterscheidet und verschlossen ist, solange dieser Beutel (s) nicht an dem Frischhalte- und Abgabegerät angebracht ist.

2. Einrichtung zum Frischhalten und zur Abgabe eines flüssigen oder dickflüssigen Stoffes (P) aus einem Behälter mit diesem Stoffe, aus welchem dieser Stoff mit Hilfe eines geeigneten Entnahmemittels (12) entnommen wird, mit einem Ableitungsmittel, das dem Behälter mit dem Stoffzugeordnet ist und aus einem Schlauch oder einer biegsamen Röhre (13) besteht, welcher oder welche mit zwei Apschlußstücken (10, 11) des Behälters verbunden ist, und mit Pumpmitteln (30), um den in dem Behälter enthaltenen Stoff (P) zum Teil außerhalb dieses Behälters in einem geschlossenen Kreislauf zirkulieren zu lassen, **dadurch gekennzeichnet, daß** dieser Behälter ein deformierbarer, weicher Beutel (s) ist und daß er ein einheitlich dosierbares Entnahmemittel, wie einen Hahn oder ähnliches (12,12'), aufweist, das manuell oder automatisch betätigbar ist und mit einer Leitung (51) zusammenwirken kann, die mit dem Schlauch oder der biegsamen Röhre (13) verbunden ist, welche das dem Behälter des Stoffes (P) zugeordnete Ableitungsmittel bildet, wobei das freie Ende dieser Leitung (51), das im Abstand von jenem liegt, das mit dem Schlauch oder der biegsamen Röhre (13) verbunden ist, verschlossen ist, solange der Beutel (s) nicht an der Einrichtung angebracht ist.

3. Einrichtung nach Anspruch 2, **dadurch gekennzeichnet, daß** die Leitung (51), mit welcher ein einheitlich dosierbares Entnahmemittel zusammenwirkt, mit einem dritten Anschlußstück (71) des weichen Beutels verbunden ist, welches sich von den Anschlußstücken (10, 11) unterscheidet, an welchen die biegsame Röhre (13) angeschlossen ist.

4. Einrichtung nach Anspruch 3, **dadurch gekennzeichnet, daß** die drei Anschlußstücke (10, 11, 71), die mit den zwei ersten Anschlußstücken (10, 11) verbundene Röhre (13) und die mit dem dritten Anschlußstück (71) verbundene Leitung (51) mit dem deformierbaren Beutel (s) verbunden sind und mit diesem eine einstückige, unzerlegbare, gas- und flüssigkeitsdichte Anordnung bilden.

5. Einrichtung nach einem der Ansprüche 2 bis 4, **dadurch gekennzeichnet, daß** sie weiters Mittel (50) zur Regelung der Temperatur des frischzuhaltenden und abzugegebenden Stoffes aufweist, die anhand von Heiz- oder Kühlmitteln realisiert sind, welche der biegsamen Röhre (13) zugeordnet sind.

6. Einrichtung nach einem der Ansprüche 2 bis 5, d**adurch gekennzeichnet, daß** sie weiters eine aseptische Barrierenvorrichtung (60) aufweist, die den Entnahmemitteln zugeordnet ist.

7. Behälter für ein fischzuhaltendes und abzugebendes Produkt zur Durchführung des Verfahrens nach Anspruch 1 und/oder zur Verwendung in der Einrichtung nach einem der Ansprüche 2 bis 6, **dadurch gekennzeichnet, daß** er aus einem weichen, deformierbaren Beutel (s) besteht und zumindest zwei voneinander beabstandete Anschlußstücke (10, 11) aufweist, die untereinander außerhalb des Behälters mittels eines Schlauchs oder einer biegsamen Röhre (13) verbunden sind, welche die Zirkulation des frischzuhaltenden und abzugebenden Stoffes (P) entlang eines geschlossenen Kreislaufs ermöglichen, und daß er ebenso eine Leitung (51) zum Entnehmen des Inhalts des Behälters aufweist, wobei diese Leitung mit einem ihrer Enden mit dem Schlauch oder der biegsamen Röhre (13) verbunden ist, wogegen ihr anderes Ende verschlossen ist, solange die Entnahme nicht begonnen hat.

8. Behälter nach Anspruch 7, **dadurch gekennzeichnet, daß** er ein drittes Ansatzstuck (71) aufweist, das von den zwei Ansatzstücken (10, 11), an welche die Leitung (51) angeschlossen ist, entfernt ist, und daß der Beutel (70), die Ansatzstücke (10, 11, 71) der Schlauch oder die biegsame Röhre (13) und die Leitung (51) eine unzerlegbare, einstückige Einheit bilden, welche flüssigkeits- und gasdicht ist.

9. Behälter nach Anspruch 7 oder 8, **dadurch gekennzeichnet, daß** er mit Hilfe von Schweißnähten (55) unterteilt ist, die zwei gegenüberliegende Seiten des Beutels (s) verbinden, um innerhalb des Beutels eine gewundene Zirkulationsstrecke für den Stoff (P) festzulegen.
